Europäisches Patentamt

European Patent Office

Office européen des brevets

(11) Publication number: **0 093 157
B1**

# EUROPEAN PATENT SPECIFICATION

(45) Date of publication of patent specification: **10.05.89**

(51) Int. Cl.⁴: **B 65 B 3/04**

(21) Application number: **82903627.6**

(22) Date of filing: **03.11.82**

(86) International application number:
**PCT/US82/01551**

(87) International publication number:
**WO 83/01605 11.05.83 Gazette 83/11**

(54) COUPLING AND VALVE ASSEMBLY FOR A LIQUID DISPENSER.

(30) Priority: **09.11.81 US 319580
08.03.82 US 355530**

(43) Date of publication of application:
**09.11.83 Bulletin 83/45**

(45) Publication of the grant of the patent:
**10.05.89 Bulletin 89/19**

(84) Designated Contracting States:
**AT BE CH DE FR GB LI LU NL SE**

(56) References cited:
**FR-A-2 096 562
FR-A-2 491 191
US-A-1 311 745
US-A-2 950 835
US-A-3 184 091
US-A-3 687 161
US-A-3 768 501
US-A-3 843 021
US-A-4 353 488**

(73) Proprietor: **LIQUI-BOX CORPORATION
P.O. Box 494
Worthington, OH 43085 (US)**

(72) Inventor: **BOND, Curtis J.
461 Donithen Road South
Marion, OH 43302 (US)**
Inventor: **ULM, John G.
P.O. Box 29
Upper Sandusky, OH 43351 (US)**

(74) Representative: **Cole, David John
Executive Liaison Services 54 Templemere
Weybridge Surrey KT13 9PB (GB)**

Courier Press, Leamington Spa, England.

## Description

This invention relates to a coupling, connecting and valve assembly for a liquid dispenser; the assembly of the invention comprises a combination of a coupling and valve assembly with a connector member.

Various systems are in use or have been proposed for dispensing beverage syrup from a disposable package consisting of a flexible, collapsible bag in a corrugated box (commonly referred to as "bag-in-box" package). One such system uses a bag provided with a spout through which filling and dispensing can occur; carried on the spout is a disposable, quick-disconnect coupling and valve assembly which is adapted to receive the connector member (i.e., the service-line connector) of the beverage dispensing system. The valve of the coupling and valve assembly opens automatically as the connector member is connected to the spout and closes as it is disconnected therefrom to prevent syrup running from the bag. However, since the valve includes a coil or equivalent spring arrangement for closing the valve, it is expensive to produce and, after use for a period of time, the spring has a tendency to weaken and become clogged with the sticky syrup and, therefore, does not always automatically close to prevent drainage from the bag. Moreover, the disposable coupling is threaded to receive a similarly-threaded connector member, which is a fixed unit of the beverage dispensing system. It is difficult and time-consuming to connect the threaded connector member on to the disposable coupling, which is mounted on the exposed spout of the bag-in-box package since such connection requires the use of both hands to hold or manipulate the two parts to be coupled while they are secured together. This is often inconvenient and leads to fluid loss.

Other prior art couplings which do not use screw threads are not suitable for mounting on the spout of a flexible bag and do not include a disposable coupling. One reason why they are not suitable for mounting on the spout is that considerable spring pressure must be overcome by axial movement of the two parts to be coupled, and this not only required the use of two hands but also might result in displacement of the spout from the box wall if one part were mounted thereon. Furthermore, considerable loss of fluid could occur during the coupling action.

US—A—3 768 501 describes a coupling, connecting and valve assembly for use in inflating articles with gas. The assembly described in this patent comprises a spout and a valve member movably mounted within the spout. The spout has open inner and outer ends, and the valve member has an open outer end and a closed inner end, thus providing an outwardly-opening socket capable of receiving one end of a connector member therein. The valve member also has a dispenser outlet opening into the socket, and the spout and the valve member are so shaped that they provide inner and outer seals between the valve member and the spout inwardly and outwardly respectively of the dispenser outlet, and a one-way stop which prevents the dispenser outlet moving outwardly beyond the outer seal but permits inward movement of the dispenser outlet inwardly relative to the spout to permit dispensing of gas through the dispenser outlet and the socket.

The present invention provides a coupling, connecting and valve assembly which is an improvement on that described in US—A—3 768 501 and which overcomes the aforementioned disadvantages of coupling, connecting and valve assemblies for liquid dispensers.

The coupling, connecting and valve assembly of the present invention comprises a spout having open inner and outer ends, a valve member having an open outer end and a closed inner end, thus providing an outwardly-opening socket, the valve member also having a dispenser outlet opening into the socket, and the spout and the valve member being so shaped that they form an outer seal between them outwardly of the dispenser outlet and are capable of providing an inner seal between them inwardly of the dispenser outlet, whereby a one-way stop prevents the dispenser outlet moving outwardly beyond the outer seal when the dispenser outlet is disposed between the inner and outer seals, but permits inward movement of the dispenser outlet inwardly of the spout, thus permitting dispensing of liquid through the dispenser outlet and the socket. The coupling, connecting and valve assembly of the present invention further comprises a connector member, one end of which is capable of being inserted into the socket, whereby the connector member has a conduit extending therethrough, the connector member (70, 70a, 70b) being such that when one end of the connector member is inserted into the socket, the dispenser outlet is not blocked and the conduit is in fluid communication with the interior of the socket, and such that by pushing the connector member into the socket, the valve member can be moved from a closed position, wherein the outlet is disposed between the inner and outer seals and is thus sealed, to an open position, wherein the dispenser outlet lies inwardly relative to the inner end of the spout so as to permit dispensing of liquid through the dispenser outlet, the socket and the conduit. The assembly of the present invention differs from that described in US—A—3 768 501 in the following characteristics:

the outer end of the valve member is provided with at least one gripper lug mounted on the main part of the valve member by means of a resilient finger;

the outer end of the spout is provided with an inwardly-tapering cam surface engageable by the gripper lug as the valve member is inserted inwardly into the spout; and

the connector member is provided with a groove for engagement with the at least one gripper lug when the connector member engages the socket of the valve member and pulls it inwardly to permit the dispensing of liquid, and for releasing the socket after the valve member has been pulled outwardly to its closed position.

As already indicated, the coupling, connecting and valve assembly of the present invention is primarily, though not exclusively, intended for use in dispensing from bag-in-box dispensing packages. When the present assembly is used in conjunction with such a package, it will be appreciated that "inward" and "outward" refer to movement toward and away from, respectively, the interior of the package.

The connector member of the assembly of the present invention is so formed that insertion of the connector member into the socket in the valve member will move the valve member from its closed to its open position, thus permitting dispensing of liquid through the dispenser outlet, the socket and the conduit in the connector member. The provision of the gripper lug(s) in the assembly ensures that, as the connector member is withdrawn outwardly, it automatically restores the valve member to its closed position, thus ensuring that no accidental spillage of liquid will as the connector member is withdrawn. Thus, no springs are required to close the valve when dispensing ceases and the connector is withdrawn. It is economic to discard the spout and valve member of the assembly with the bag to which they are attached, since both these two parts can be economically molded from a synthetic resin.

In the assembly of the present invention, it is preferred that the spout and the valve member each comprise a hollow tubular body, the valve member body being slidably axially within the spout body, and that the outer seal be formed by an annular seal disposed on the valve member body and capable of frictionally engaging the spout body, and that the one-way stop comprise an annular shoulder disposed on the valve member body inwardly of the annular seal and a stop shoulder disposed on the spout body and capable of engaging the annular shoulder.

The assembly of the present invention desirably includes a dust cap having a body portion capable of extending into the socket of the valve member, a peripheral flange capable of covering the outer ends of the valve member and the spout, and a second flange extending inwardly from the peripheral flange and capable of surrounding the outer end of the spout. To allow the dust cap to be mounted upon the spout and still permit the valve member to move relative to the spout, desirably the dust cap is formed so that it can frictionally engage the spout in a first position when the valve member is disposed in an outward position relative to the spout and can frictionally engage the spout in a different, second position when the valve member is disposed in an inward position relative to the spout.

Conveniently, the assembly of the present invention comprises a mounting member capable of being releasably mounted on the spout and a guide member connected to the mounting member and capable of supporting the connector member while permitting the connector member to move inwardly and outwardly relative to the spout. The provision of such a mounting member and guide member enables the connector member to move inwardly and outwardly relative to the spout without becoming loose, so that the connector member can be moved back until the valve member is in its closed position without becoming detached from the assembly and perhaps coming into contact with surfaces which would introduce contamination on to the connector member, which may be undesirable, especially when the assembly of the present invention is being used for dispensing beverage syrups or other liquids intended for human consumption. Desirably, the spout has a cylindrical outer surface, and the mounting member is provided with a spout-engaging, part-cylindrical interior surface having a radius substantially equal to that of the cylindrical outer surface of the spout and capable of engaging this cylindrical outer surface, the spout-engaging, part-cylindrical interior surface comprising more than a hemicylinder but less than a full cylinder. Also, desirably the spout is provided with an inner flange and an outer flange, both these flanges extending radially-outwardly from the spout and having cylindrical outer surfaces, and the mounting member is provided with a first part-cylindrical interior surface capable of engaging the cylindrical outer surface of the inner flange and a second part-cylindrical interior surface capable of engaging the cylindrical outer surface of the outer flange, the spout-engaging, part-cylindrical interior surface of the mounting member being disposed between, and of smaller radius than, the first and second part-cylindrical interior surfaces such that engagement of the spout-engaging, part-cylindrical interior surface of the mounting member with the cylindrical outer surface of the spout will permit rotation, but will prevent relative inward and outward movement, between the mounting member and the spout.

Preferred embodiments of the invention will now be described, though by way of illustration only, with reference to the accompanying drawings, in which:

Fig. 1 is a perspective view of the spout and valve member of an assembly of the invention with the valve member in its closed position;

Fig. 2 is a side elevation of the spout and valve member shown in Fig. 1;

Fig. 3 is an enlarged plan view of the spout and valve member shown in Figs. 1 and 2;

Fig. 4 is a side elevation of the valve member shown in Figs. 1—3;

Fig. 5 is a vertical section through the axis of the spout and valve member shown in Figs. 1—3 and shows a dust cap engaging the spout in a first position;

Fig. 5A is an enlarged detail from Fig. 5 showing the extreme output end of the valve member and the adjacent part of the dust cap;

Fig. 6 is a section along the line 6—6 in Fig. 2;

Fig. 6A is an enlarged detail from Fig. 6 showing the extreme outward end of the valve member and the adjacent part of the spout;

Fig. 7 is a vertical section through the spout shown in Figs. 1—6 taken in the same plane as in Fig. 6, but showing the spout with the valve member removed and with the spout being used in conjunction with a filling tube;

Fig. 8 is a vertical section similar to Fig. 6 showing hhe valve member and dust cap being repositioned on the spout with the dust cap engaged with the spout in a second position;

Fig. 9 is a section similar to Fig. 6 but showing the assembly provided with barrier means to reduce oxygen penetration into the associated bag;

Fig. 10 is a section taken in the same plane as Fig. 6 but showing the assembly incorporating a first connector member, with the valve member of the assembly in its closed position;

Fig. 11 is a section similar to Fig. 10 but showing the valve member in its open position;

Fig. 11A is an enlarged part section in the same plane as Fig. 10 but showing a modified assembly having a different form of connector member and valve member;

Fig. 12 is a section similar to Fig. 11 but showing the assembly incorporating another connector member;

Fig. 13 is a side elevation of still another connector member, together with its associated mounting member and guide member;

Fig. 14 is an end elevation of the still another connector member, mounting member and guide member shown in Fig. 13, looking from the left in Fig. 13;

Fig. 15 is an underneath plan view of the still another connector member, mounting member and guide member shown in Figs. 13 and 14;

Fig. 16 is an end elevation of the still another connector member, mounting member and guide member shown in Figs. 13—15 looking from the right in Fig. 13;

Fig. 17 is a section along the line 17—17 in Fig. 13;

Fig. 18 is a side-elevation similar to Fig. 13 but showing the mounting member mounted upon a spout;

Fig. 19 is a section along the line 19—19 in Fig. 18;

Fig. 20 is a section similar to Fig. 19 but showing the still another connector member inserted into the socket of the valve member of the assembly, with the valve member in its open position;

Fig. 21 is a section along the line 21—21 in Fig. 18;

Fig. 22 is a side elevation of the assembly shown in Fig. 5 with the dust cap engaging the spout in a second position, the assembly being partly cut away to show details of the mounting of the dust cap on the spout; and

Fig. 23 is a section through the outward end of a spout usable in the assembly of the instant invention modified to provide a lip.

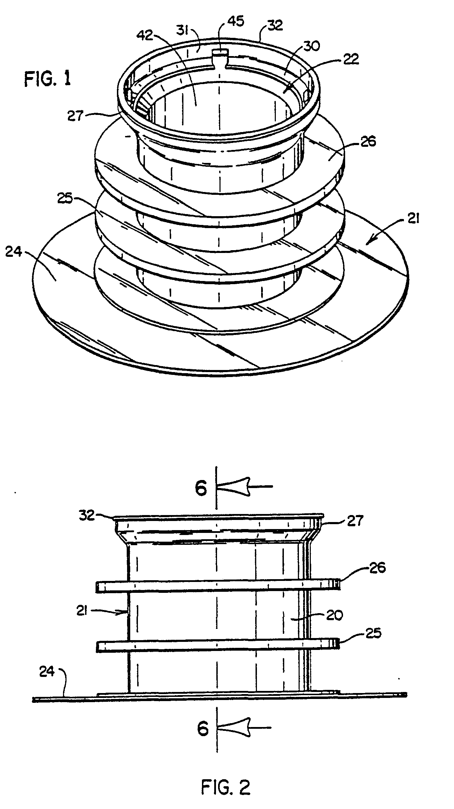

The coupling and valve assembly of the invention shown in Figs. 1 to 6 comprises two main parts, namely a spout 21, intended for attachment to a flexible bag formed of synthetic resin, and a valve member 22, which is slidable within the spout 21. Both the spout 21 and the valve member 22 can be molded inexpensively from plastic and thus, since a minimal number of parts are used, the coupling and valve assembly can be manufactured at a cost sufficiently low to enable it to be discarded with the bag to which it is to be attached.

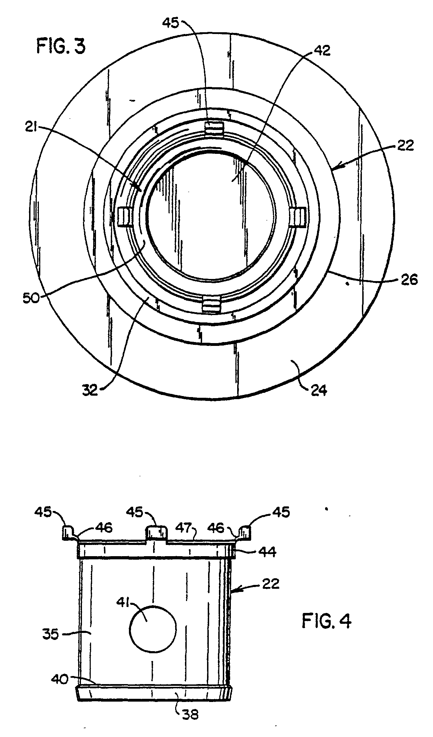

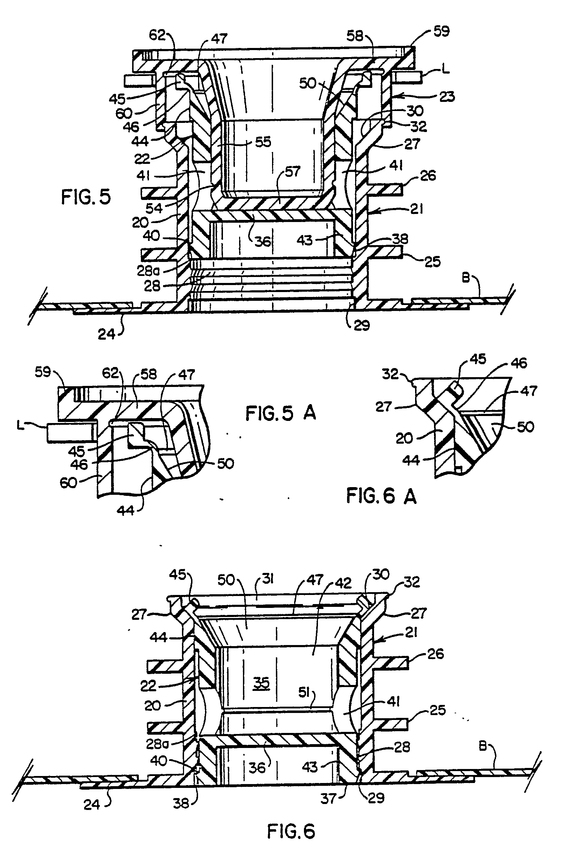

As in prior art spouts intended for use with bag-in-box packages, the spout 21 comprises a hollow tubular body 20 open at both its inner and outer ends (the inner and outer ends of the spout 21 and the valve member 22 are shown at the bottom and top respectively of Figs. 1, 2, 4, 5 and 6). The spout body 20 is provided with three flanges, all of which extend radially outwardly from the spout body, these three flanges being an attachment flange 24, which can be sealed to a bag B in the conventional manner (as described below with reference to Figs. 5 and 6), an inner flange 25 and an outer flange 26. The inner and outer flanges 25 and 26 respectively each have the form of an annulus of a disc and, as best seen in Figs. 2 and 3, the outer surfaces of the flanges 25 and 26 are cylindrical.

As best seen in Figs. 1, 2, 3 and 5, the outer end of the spout body 20 is flared at 27 to provide an internal, inwardly-tapering, frusto-conical cam surface 30 and an outwardly-extending flange 31. At the outer extremity of the flange 31 is formed a radially-outwardly-projecting cap locking lip 32.

The internal surface of the inner end of the spout body 20 is provided with a plurality of sealing rings 28 axially spaced from one another. An annular friction shoulder 28a is disposed outwardly of the sealing rings 28, while a stop shoulder 29 is disposed at the innermost extremity of the spout body 20.

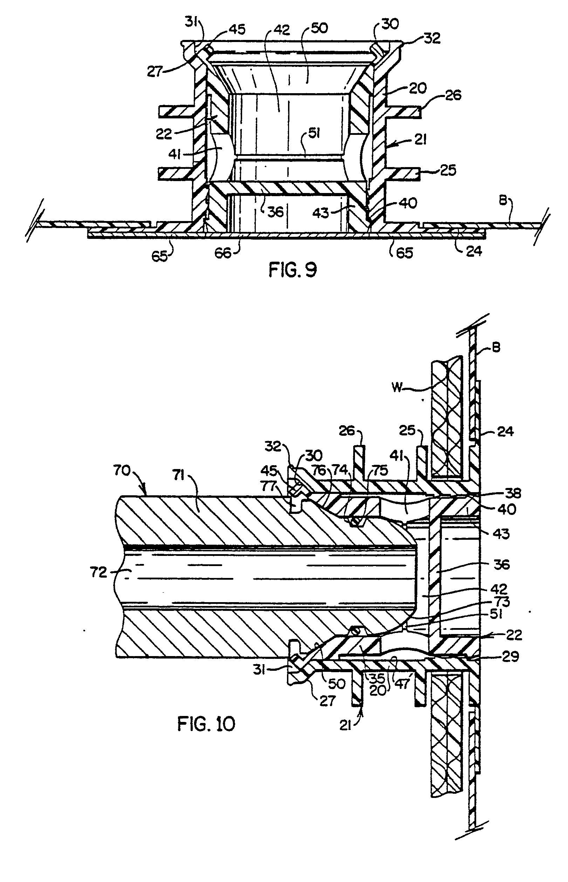

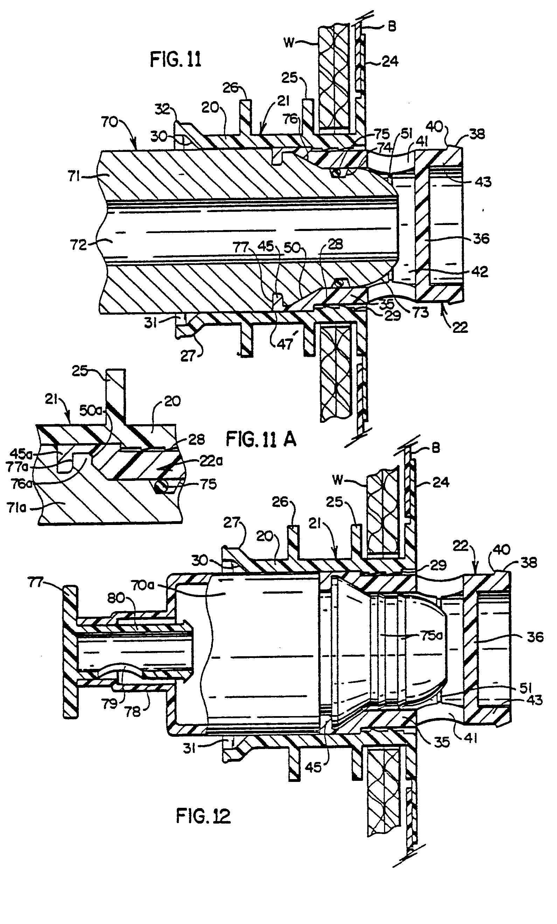

The valve member 22 comprises a substantially cylindrical, hollow tubular body 35 which is open at its upper outer end but closed at its inner end by a transverse wall 36 (Figs. 5 and 6) so as to provide an outwardly-opening socket 42 (Fig. 3) capable of receiving a connector member therein, as described below. A friction and sealing band 44 extends outwardly from the outer end of the valve body 35, while the extreme outward end of the valve body 35 carries (as best seen in Fig. 4) four gripper lugs 45 which are mounted on the valve body 35 by means of resilient fingers 46. More or less than four lugs 45 could of course be provided if desired. Inwardly of the lugs 45 and adjacent the band 44, the internal surface of the valve body 35 has the form of an inwardly-tapering, frusto-conical guide and bearing surface 50; the provision of this frusto-conical surface 50 produces a relatively sharp outward edge of the valve body 35 where the fingers 46 are connected to the valve body. A lip 47 extends around the band 44 between the fingers 46; this lip 47 extends radially-outwardly from the tubular valve body 35 and is provided to increase friction as described below with reference to Figs. 10 and 11.

Inwardly of the band 44 but immediately outwardly of the transverse wall 36, the cylindrical walls of the valve body 35 are pierced by two circular dispenser outlets 41, the inner ends of these outlets opening into the socket 42. As best seen in Figs. 5 and 6, the transverse wall 36 is spaced from the inward end of the valve body 35 so that the portion of the valve body 35 lying inwardly of the transverse wall 36 forms an inwardly-extending skirt 43. This skirt 43 carries at its inward end a band 38 having a frusto-conical, inwardly-tapering surface. The outward end of the band 38 forms an annular stop shoulder 40 disposed outwardly of the extreme inner end of the valve body 35.

To assemble the coupling and valve assembly shown in Figs. 1—6 for use, the inner end of the valve body 35 is inserted within the outer end of the spout body 20; as the inner end of the valve body approaches the outer end of the spout body, coaction between the frusto-conical cam surface 30 on the spout body and the frusto-conical outer surface of the band 38 on the valve body will accurately center the valve body within the hollow interior of the spout body, wherein it forms a tight but slideably friction fit with the interior surface of the spout body. As the assembler continues to push the valve member 22 inward relative to the spout 21, eventually the position shown in Fig. 5 is reached. As best seen in Fig. 5A, at this point the lugs 45 are not constrained and they lie at their maximum distance radially outwardly of the band 44, the fingers 46 having substantially the form of quadrants of circles. The position of the assembly shown in Fig. 5, in which the band 38 on the valve member lies immediately outwardly of the shoulder 28a on the spout 21, is the normal condition of the assembly prior to filling of the bag to which it is attached and is the condition in which the assembly is supplied to the user; because the valve member 22 is a tight friction fit within the spout 21, there is no risk of the valve member 22 sliding out of the spout 21.

Although the shoulder 28a resists movement of the band 38 past it, the spout 21, being made of synthetic resin, is sufficiently deformable that by exerting moderate pressure upon the outer end of the valve member 22, coaction between the band 38 and the shoulder 28a will cause the inner end of the spout 21 to expand radially, thus permitting the band 38 to slide inwardly relative to the spout 21 past the shoulder 28a and the sealing rings 28 until the valve member 22 reaches the position shown in Fig. 6, which is the "closed" position of the assembly. As the valve member 22 approaches the position shown in Fig. 6, the lugs 45 come into contact with the cam surface 30 and are thus forced radially-inwardly to the position shown in Fig. 6A, in which the inner ends of the lugs 45 lie flat against the cam surface 30.

In the closed position of the assembly shown in Fig. 6, the inner end surface 37 of the skirt 43 of the valve member 22 lies flush with the inner face of the flange 24 on the spout 21. Two seals are formed between the exterior surface of the valve member 22 and the interior surface of the spout 21, these two seals comprising an outer seal formed by contact between the band 44 and the cylindrical interior surface of the spout 21, and an inner seal formed by contact between the sealing rings 28 and the exterior cylindrical surface of the skirt 43 on the valve member 22. It will be seen that, in the position shown in Fig. 6, the dispenser outlets 41 lie between the inner and outer seals and are thus sealed. Also in the position shown in Fig. 6, the stop shoulder 40 on the valve member 22 abuts the shoulder 29 on the spout 21 and the abutment between these two shoulders provides a one-way stop which prevents outward movement of the valve member 22 relative to the spout 21. However, although the valve member 22 cannot move outwardly relative to the spout 21, it will be apparent from Fig. 6 that the valve member can move inwardly relative to the spout (since the band 44 can slide along the interior cylindrical surface of the spout, while the sealing rings 28 can slide along the exterior surface of the valve member) until the inner end of the band 44 abuts the shoulder 28a, and that if the valve member is slid inwardly relative to the spout until this abutment between the band 44 and the shoulder 28a occurs, the dispenser outlets 41 will slide out of the inner end of the spout, past the flange 24, so that the assembly will adopt an open position (described in more detail below with reference to Fig. 11) which permits dispensing of liquid lying behind the flange 24 through the dispenser outlets 41 and socket 42.

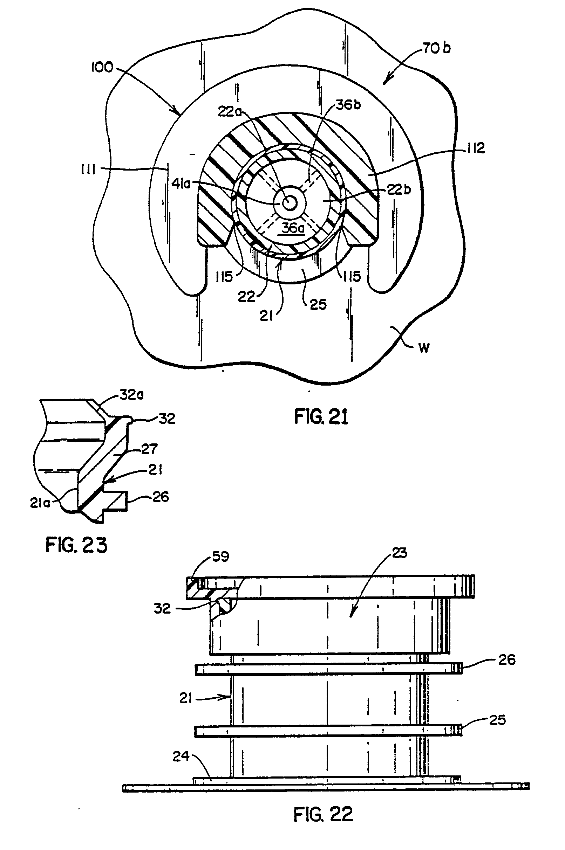

The coupling and valve assembly of the invention shown in Figs. 1—6 further comprises a dust cap 23, shown in Figs. 5 and 22. As shown in Fig. 5, the dust cap 23 has a hollow body portion 55 which is a friction fit within the socket 42 in the valve member 22; when the dust cap body portion is thus engaged within the socket, an inner-end wall 57 of the dust cap engages the transverse wall 36 of the valve member, while a groove 54 encircling the inner end of the body portion 55 accommodates a rib 51 (Fig. 6) which extends around the internal surface of the valve member 22 but is interrupted by the dispenser outlets 41. As best seen in Fig. 5, both the groove 54 and the rib 51 are of circular cross-section and since both the dust cap and the valve member are of a resiliently deformable synthetic resin, the groove 54 can be released from the rib 51 by pulling the dust cap 23 outwardly. A flange 58 extends radially outwardly from the outer end of the dust cap body portion 55 and covers the outer ends of the valve member 22 and the spout 21. A cylindrical lip 59 extends outwardly from the periphery of the flange 58. Also, a second flange 60 extends inwardly from the flange 58 and surrounds the outer end of the spout 21. The internal surface of the flange 60 has a groove (61) formed therein adjacent its inner end and a second groove 62 formed therein adjacent its junction with the flange 58. When the valve member 22 and the spout 21 are in the relative positions shown in Fig.

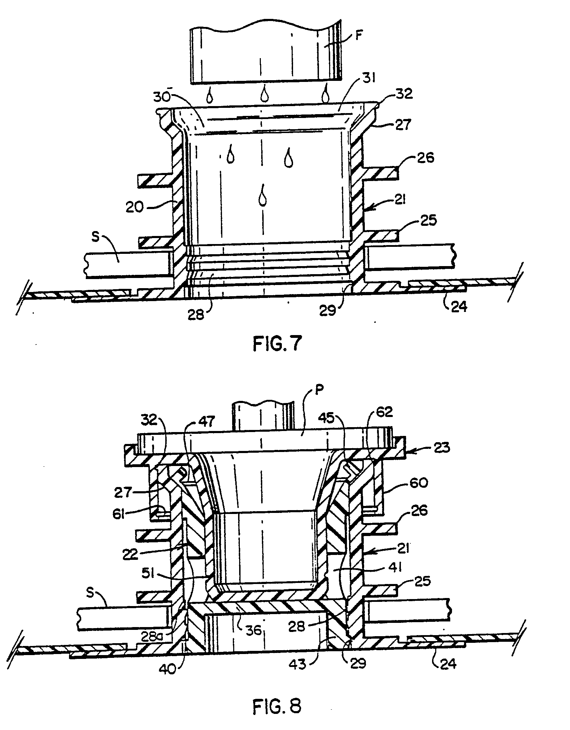

5, with the valve member disposed outwardly of the spout, the lip 32 on the outward end of the spout frictionally engages in the groove 61 adjacent the inner end of the flange 60, but when the valve member is moved inwardly relative to the spout to the position shown in Fig. 6, the lip 32 on the spout frictionally engages the dust cap in a different, second position, namely with the flip 32 frictionally engaged in the groove 62 adjacent the junction of the flages 58 and 60, as shown in Figs. 8 and 22.

As shown in Fig. 5 and 6, in use the flange 24 closes an aperture in a flexible bag B, the radially outward part of the flange 24 lying within the bag; although the inward surface of the flange 24 is flat, the forward surface has an annular raised portion encircling the spout body 20 so that the outward surface of this raised portion can lie flush with the outer surface of the bag B (as shown in Figs. 5 and 6) when the radially outward portion of the flange 24 lies within the bag B.

Fig. 7 shows how the bag B can be filled via the spout 21. Before filling the bag B, the user seals the flange 24 to the bag B as described in the preceding paragraph and clamps the spout body 20 between the flanges 24 and 25 with a clamp S which is of a conventional type and is only shown schematically in Fig. 7. At this time, the relative positions of the valve member, spout and dust cap are as shown in Fig. 5. The user next inserts a conventional lifting attachment L (shown only schematically in Fig. 5) behind the periphery of the flange 58 and removes both the dust cap and the valve member as a single unit from the spout; by pulling on the lifting attachment L while it is abutting the flange 58, the user releases the lip 32 of the spout from its engagement with the groove 61 on the dust cap, but the dust cap and the valve member move as a single unit since the rib 51 of the valve member remains engaged in the groove 54 on the dust cap. Once the dust cap and valve member have thus been removed from the spout, the outer end of the spout is brought adjacent the filler nozzle F of a conventional bag-filling machine (this nozzle F being shown only schematically in Fig. 7) and the bag B filled through the spout 21. Once the bag B has been filled, the valve member 22, with the dust cap 23 still attached thereto, is reinserted within the spout 21 and a plunger, indicated schematically as P in Fig. 8, is used to press the valve member and the dust cap inwardly relative to the spout until the dust cap, valve member and spout assume the relative positions shown in Figs. 8 and 22, in which the relative positions of the valve member and spout are exactly as shown in Fig. 6 (i.e. the assembly is in its closed position), but the dust cap has been moved inwardly relative from the spout from the position shown in Fig. 5 shows that the lip 32 on the spout is now frictionally engaged in the groove 62 on the dust cap. As described above with reference to Fig. 6, when the assembly is in a closed position, as it is in Figs. 5, 6 and 8, the abutment between the shoulder 40 on the valve member and the shoulder 29 on the spout prevents output movement of the valve member relative to the spout, and this limitation on the movement of the valve member prevents accidental leakage of liquid from the bag B which is now, of course, filled with liquid.

When using the bag B in conjunction with a coupling and valve assembly of the invention which does not have a dust cover, it is of course only necessary to remove the valve member from the spout, perform the filling operation as already described and then reinsert the valve member into the spout to the closed position shown in Fig. 6. A plunger similar to the plunger P in Fig. 8 may be used to force the valve member inwardly relative to the spout, but of course the plunger will fit into the socket 42 of the valve member rather than into the body portion 55 of the dust cap. Obviously, the valve member 22 could be supplied separately from the spout and only be inserted into the spout after the bag B has been filled.

The liquid with which the bag B is filled may be sensitive to oxygen, and if so the bag B is normally made of a barrier material which will prevent, or at least greatly decrease, the penetration of oxygen into the liquid. When the bag B is of such barrier material it is obviously desirable to prevent penetration of oxygen into the liquid via the coupling and valve assembly of the invention, and one method of reducing such oxygen penetration is shown in Fig. 9. As shown in that figure, an annular disc or closing 65 of barrier material is disposed behind the flange 24 and extends inwardly from the outer periphery of the flange 24 to the edge of the aperture through the spout body 20. A disc 66 of similar barrier material is disposed across the skirt 43 of the valve member so that when the assembly is in its closed position, as shown in Fig. 9, the disc 66 will fit tightly within the ring 65. Thus, the disc 66 and the ring 65 will greatly aid in preventing oxygen penetration through the spout into the liquid when the assembly is in its closed position.

As already mentioned, to achieve dispensing from the bag B, the valve member 22 must be moved inwardly relative to the spout 21 from the closed position shown in Figs. 6, 8, and 9. Obviously, if a dust cap is in position on the coupling and valve assembly the dust cap must first be removed. Once the dust cap has been removed, dispensing of liquid from the bag B can be effected by pushing the valve member inwardly relative to the spout by any suitable method until the dispensing outlets 41 clear the inner end of the spout. Normally, however, dispensing of liquid from the bag B is achieved by inserting a connector member into the valve member, as shown in Fig. 10. The connector member (generally designated 70) shown in Fig. 10 can be the connector of a service line to a beverage dispensing system and comprises a body 71 of tubular form having a conduit 72 extending axially therethrough. As shown in Fig. 10, one end of the connector member 72 can be inserted into the socket 42 in the valve member 22 without closing the dispenser outlets 41 so that the conduit 72 is in fluid communication with the interior of the socket and the dispenser outlets. The outer end of the connector member 70 is not shown in Fig. 10 since it is not relevant to the present invention and can be of any desired form; for example, the outer end of the connector member could be part of a standard threaded connector or be fixed to the service line. The tip 73 of the connector body 71 is hemispherical in form so that it will be guided into the socket 42 by the frusto-conical interior surface 50 at the outer end of the valve member. The hemispherical tip 73 merges into a cylindrical sealing surface 74 which is provided with a circumferential groove having an O-ring 75 mounted therein. Outwardly of the sealing surface 74, the connector body 71 is provided with a frusto-conical bearing surface 76 having the same apical angle as the frusto-conical surface 50 on the valve member 22, while immediately outwardly of the bearing surface 76 the connector body 71 is provided with a circumfrential groove 77. The main, cylindrical portion of the connector body 71 outward of the groove 77 has a diameter just slightly smaller than the diameter of the cylindrical interior surface of the spout body 20.

As shown in Fig. 10, when the assembly is in its closed position, the connector member 70 can be inserted into the socket 42 in the valve member 22 until the surface 76 of the connector body 71 engages the surface 50 on the valve member without producing relative movement between the valve member and the spout, since the lip 47 on the outer end of the valve member provides sufficient frictional resistance that relative movement between the valve member and the spout is subject to a greater resistance than relative movement between the connector member 70 and the valve member. When the surfaces 50 and 76 engage one another, the relative positions of the connector member and the valve member are such that the O-ring 75 forms a seal with the interior surface of the valve member, the tip 73 of the connector member and the opening of the conduit 72 are clear of the transverse wall 36 so that the conduit 72 is in fluid communication with the socket 42, and the lugs 45 on the valve member are still in the position shown in Figs. 6, 8 and 9, namely lying against the cam surface 30. In Fig. 10, the wall W of the cardboard container or box which surrounds the bag 13 is disposed between the flanges 24 and 25 on the spout. With the spout, valve member and connector member in the relative positions shown in Fig. 10, the assembly is still in its closed position and no liquid can flow from the interior of the bag B into the conduit 72 because of the seal formed between the seal rings 28 on the spout and the skirt 43 of the valve member. To dispense from the bag B, the connector member 70 is moved inwardly from the position shown in Fig. 10 towards the bag and, since the surfaces 50 and 76 are in contact with one another, this inward movement of the connector member will force the valve member to move inwardly relative to the spout, and eventually the assembly will achieve the open position shown in Fig. 11. In this open position, the dispensing outlets 41 in the valve member are clear of the spout so that liquid can flow from the interior of the bag B through the dispensing outlets 41 and the socket 42 into the conduit 72 in the connector member 70. As the valve member 22 moves inwardly relative to the spout 21, the lugs 45 are forced radially inwardly by the cam surface 30 until, finally, the lugs 45 abut the interior cylindrical surface 47' of the spout and are forced into the groove 77 in the connector member 70.

When it is desired to cease dispensing of liquid from the bag B, the connector member 70 is withdrawn outwardly. Since the lugs 45 are still engaged in the groove 77, this outward movement of the connector member 70 forces the valve member 22 to move outwardly with the connector member and this outward movement of the valve member continues until the shoulder 40 on the valve member abuts the shouder 29 on the spout i.e. until the valve member resumes the closed position shown in Fig. 10. At this point, the abutment between the shoulders 40 and 29 prevents further axial movement of the valve member relative to the spout, and the groove 77 now lies radially-inwardly of the cam surface 30 so that the lugs 45 can swing radially-outwardly from the groove 77 and abut the cam surface 30, as shown in Fig. 10. Thus, when the connector member 70 is withdrawn outwardly from the spout 21, the valve member 22 is automatically returned to the closed position shown in Fig. 10, dispensing of liquid ceases and no liquid can leak from the bag B. From the closed position shown in Fig. 10, the connector member may either be moved further outwardly to completely remove it from the spout, or be moved inwardly to effect further dispensing of liquid from the bag B.

Fig. 11A shows an alternative form of engaging surfaces on the valve member and connector member which can be substituted for the surfaces 50 and 76 shown in Figs. 10 and 11. As shown in Fig. 11A, the relatively long frusto-conical surface 50 can be replaced by a much shorter frusto-conical surface having an annular shoulder 50a extending radially outwardly from its outward end. Similarly, the relatively long frusto-conical surface 76 may be replaced by a much shorter frusto-conical surface having at its outward end a shoulder formed on an annular lug 76a formed on a connector body 71a. In the arrangement shown in Fig. 11a, the shoulder 50a engages the lug 76a just before lugs 45a swing into a groove 77a, thus again locking the connector member and the valve member together.

The coupling and valve assembly of the invention shown in Fig. 12 differs from that shown in Figs. 10 and 11 only in the type of connector member used. The connector member 70a shown in Fig. 12 is not used in conjunction with the service line of a beverage dispensing system, as is the connector member 70 shown in Figs. 10 and 11, but carries a built-in dispensing valve. In the connector member 70a, the O-ring 75 shown in Figs. 10 and 11 is replaced by a plurality of sealing rings 75a provided on the tip of the connector member 70a. Also, the outer end of the connector member 70a carries a tubular valve guide 78 which is of smaller diameter than the main tubular part of the connector 70a. A tubular valve member 80, provided with a radially-extending dispensing outlet 79 and a manually-operable button 77, is slideably received within the valve guide 78. It will be apparent from Fig. 12 that, when the valve member 80 is in the position shown relative to the valve guide 78, no liquid will issue from the dispensing outlet 79, but that by pulling on the button 77 an operator can slide the valve member 80 outwardly relative to the valve guide 78 until the dispensing outlet 79 is clear of the valve 78, whereupon liquid will be dispensed through the outlet 79. To prevent the valve member 80 being accidentally completely removed from the valve guide 78, which would result in accidental loss of liquid from the connector 70a, the valve guide 78 is formed with an inner section, and an outer section of smaller diameter than the inner section, so that a shoulder is formed at the point where the inner and outer sections join, and the extreme inner end of the valve member 80 is provided with a band of larger diameter than the remainder of the valve member 80, this band having a shoulder at its outward end, so that outward movement of the valve member 80 relative to the valve guide 78 is limited by coaction between the two shoulders.

Obviously, other types of dispensing valves coluld be substituted for the valve member 80 shown in Fig. 12 to permit dispensing from the bag-in-box liquid container directly without connection to a pumping or other service system.

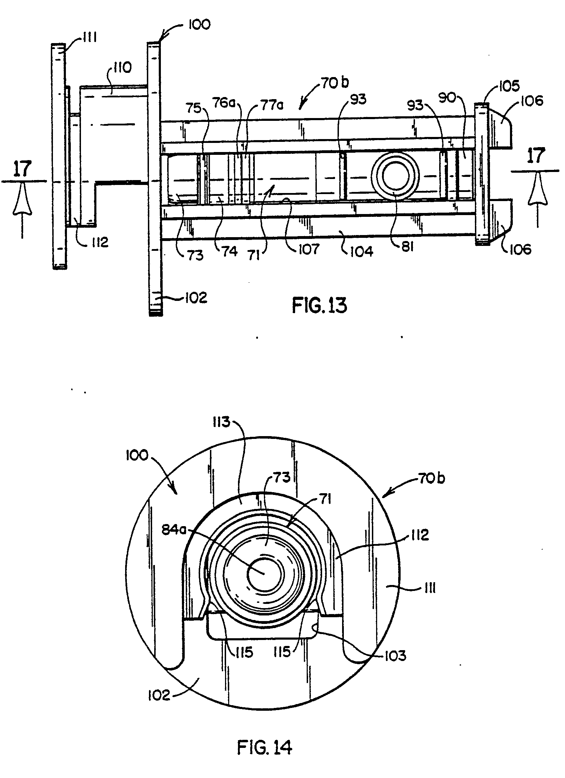

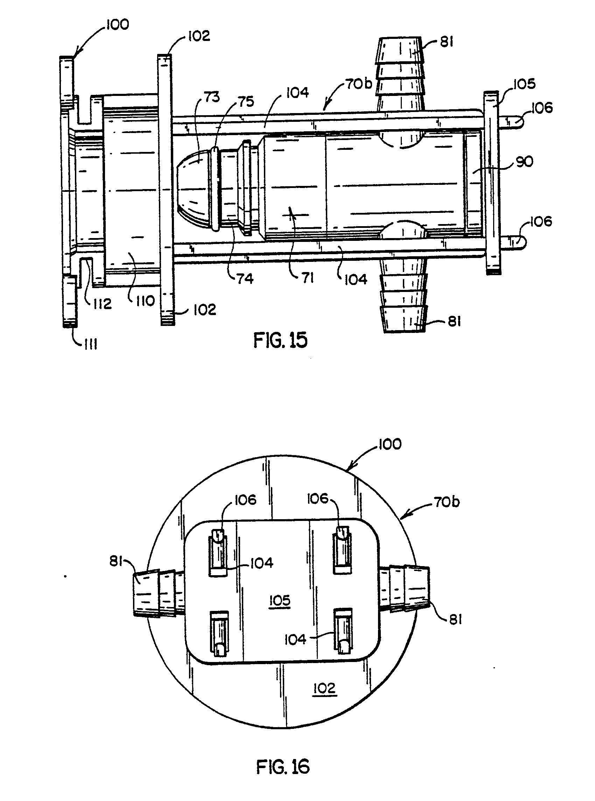

Figs. 13—16 show still another connector member 70b in conjunction with its associated mounting member and guide member. As best seen in Figs. 13 and 15, the connector member 70b closely resembles the connector member 70 shown in Figs. 10 and 11 but incorporates the modification shown in Fig. 11A; thus, the connector member 70b has a hemispherical tip 73, a sealing surface 74 provided with a groove having an O-ring 75 mounted therein, a lug 76a and a groove 77a, all of which are identical to the corresponding parts shown in Figs. 10 and 11 or 11A. However, the connector member 70b is provided with two diametrically-opposed socket fittings 81 adjacent its outward end to enable the connector member to be used to connect several bags B in tandem in a dispensing system. Naturally, the hollow interiors of the socket fittings 81 are in fluid communication with the conduit passing through the connector member 70b. Also, the connector member 70b is provided with two axially-spaced pairs of guide lugs 93 which cooperate with the guide member, as described below.

The mounting member shown in Figs. 13—16 has the form of a spout clamp, generally designated 100, which can readily be clamped to or moved from the spout of an assembly of the invention. The spout clamp 100 comprises an outer collar 102 having a large central opening 103 (Fig. 14) through which the inner part of the body 71 of the connector member 70b can pass. A substantially hemi-cylindrical flange 110 is integral with the collar 102 and extends inwardly (to the left in Figs. 13 and 15) therefrom; this flange 110 has an internal diameter sufficient to enable it to be slipped radially over the spout on which it is to be mounted, as described in more detail below. As shown in Figs. 13 and 15, the inner end of the flange 110 is provided with an end wall which supports an inwardly-extending channel section 112 which is substantially U-shaped in cross-section. Finally, the inner end of the channel section 112 carries a flange 111 which (as best seen in Fig. 14) is also substantially U-shaped so as to provide a central recess 113.

The guide member (or, more accurately, guide assembly) shown in Figs. 13, 15, and 16 comprises two pairs of flexible guide strips 104 which are integral with the collar 102 and extend outwardly therefrom parallel to the axis of the connector body 71. The guide strips 104 are of L-shaped cross-section in planes perpendicular to the axis of the connector body 71 and are arranged so that the horizontal limbs of the guide strips define the edges of two parallel guide channels 107 (Fig. 13) lying on either side of the connector body 71. These guide channels 107 receive the lugs 93 on the connector body 71 (and also the sockets 81); the lugs 93 are slideable along the channels 107, thus enabling the connector member 70b to slide inwardly and outwardly relative to the mounting member and guide assembly.

The outer ends of the guide strips 104 pass through two pairs of vertical slots in a clip plate 105. As best seen in Fig. 13, the guide strips 104 have enlarged outer end sections 106 which, when the guide assembly is in its assembled condition as shown in Figs. 13—16, lie outwardly of the plate 105: shoulders formed at the junction of the enlarged sections 106 with the main sections of the guide strips abut the outer face of the plate 105 so as to prevent the enlarged sections 106 slipping back through the slots in the plate 105. Also as best seen in Fig. 13, the outer ends of the enlarged sections 106 are beveled to facilitate their insertion through the slots in the plate 105. The vertical slots in the plate 105 are arranged at the corners of a rectangle, as best seen in Fig. 16, so that the guide strips 104 will be held in the correct relative positions to form the parallel guide channels 107.

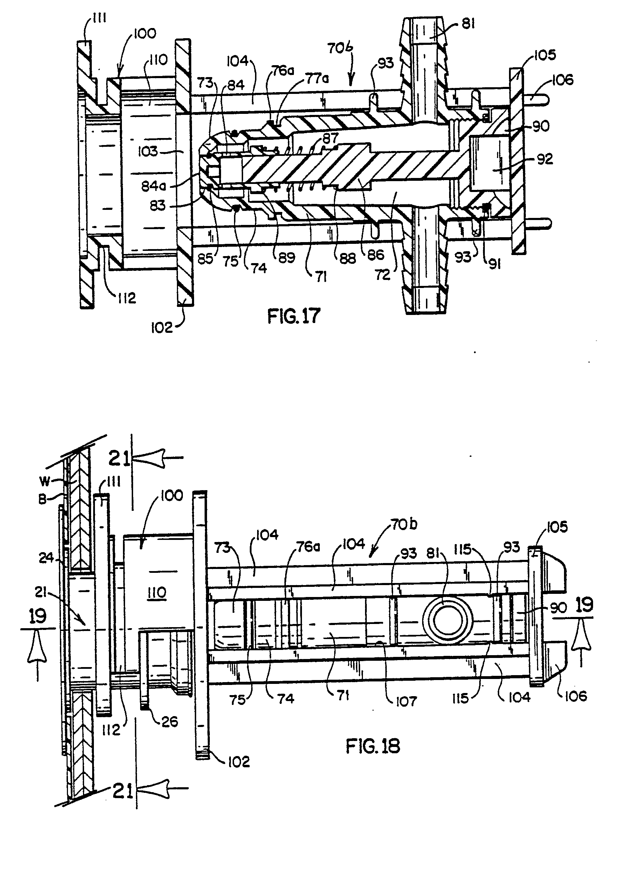

Although the exterior form of the connector member 70b is (apart from the sockets 81 and the guide lugs 93) substantially similar to that of the connector member 70 shown in Figs. 10 and 11, with the modification shown in Fig. 11A, the interior formation of the connector member 70b is very different from that of the connector member 70 described above, as may be seen from Fig. 17. As shown in Fig. 17, the outer end of the connector body 71 carries an internal screw thread, which is engaged with a corresponding external screw thread on a plug 90. The plug 90 has an outer cylindrical threaded section, which engages the connector body 71, and an outer cylindrical section or flange, which is of greater diameter than the inner cylindrical section and which lies outwardly of the rear end of the connector body 71. The extreme outer end of the connector body 71 and the portion of the plug 92 both have matching grooves cut therein and an O-ring 91 is disposed in these grooves to form a fluid-tight seal between the connector body 71 and the plug 90. The outer face of the plug 90 is provided with a socket 92 into which a tool can be inserted to facilitate removal of the plug 90 from the connector body 71.

A valve stem 86 extends inwardly from the inner face of the plug 90 along the axis of the connector 71. A connector valve member 84, having the form of a tube with its inner end closed by an end wall 84a, is slideably mounted on the inner end of the valve stem 86. The connector valve member 84 is biased inwardly relative to the valve stem 86 by a biasing device in the form of a compression spring 87 whose outward end abuts a shoulder 88 formed on an enlarged central section of the valve stem 86 and whose inner end abuts a shoulder 89 formed on the connector valve member 80. As shown in Fig. 17, when the connector valve member 84 is unconstrained, the spring 87 will force the connector valve member 84 forwardly until the end wall 84a of the valve member closes the aperture 83 through which the conduit 72 emerges through the tip 73 of the connector member 70b; this position of the valve member 84 will hereinafter be referred to as its closed position. The inner end of the valve member 84 is of smaller diameter than the remainder of the valve member and carries an O-ring 85 which, when the connector valve member 84 is in its closed position as shown in Fig. 17, abuts a seat provided within the aperture 83. The coaction between the O-ring 85 and the seat within the aperture 83 not only prevents leakage of liquid between the walls of the aperture 83 and the connector valve member 84 but also prevents excessive forward movement of the connector valve 84 by the spring 87 so that the exposed surface of the end wall 84a lies flush with the surrounding surface of the tip 73. It will be apparent that, although the connector valve member 84 normally adopts the closed position shown in Fig. 17, by exerting pressure upon the end wall 84a the connector valve member 84 can be forced outwardly relative to the connector body 71 against the bias of the spring 87 until the connector valve member clears the aperture 83, thus permitting flow of liquid through the aperture 83 into the conduit 72; such a position will hereinafter be referred to as the open position of the connector valve member 84.

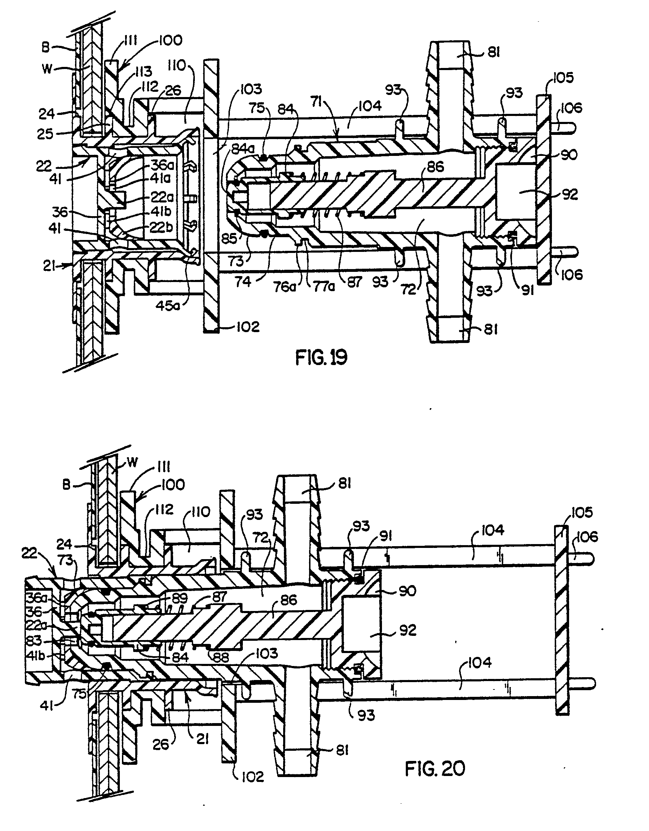

The manner in which the mounting member 100 is mounted upon the spout of an assembly of the invention, so as to dispose the guide assembly and connector member 70b adjacent that spout, is shown in Figs. 18, 19, and 20. The spout 21 on which the spout clamp 100 is mounted is exactly as described above with reference to Figs. 1—8. The spout 21 is affixed to a flexible bag B disposed within a box W, as described above with reference to Figs. 10 and 11, with the axis of the tubular spout 21 substantially horizontal. Obviously, before the spout clamp 100 is mounted on the spout, the valve member 22 must be in its closed position (as shown in Fig. 19) in order to prevent spillage of liquid from the back B.

As shown in Figs. 19 and 20, the valve member 22 which is disposed within the spout 21 is similar but not identical to that described above with reference to Figs. 1—8. The valve member 22 shown in Figs. 19 and 20 has a cylindrical projection 22a extending outwardly from the center of its transverse wall 36, and a filler collar 22b disposed within the socket 42 adjacent the transverse wall 36. The outer surface of this filler collar 22b is so shaped that the filler collar 22b in effect modifies the shape of the socket 42 to be of the same size and shape as the tip 73 of the connector member 70b; this modification of the socket ensures that when the tip 73 of the connector member 70b is withdrawn from the socket, no liquid can accumulate within the socket. The filler collar 22b has a central opening 41a which surrounds but is of larger diameter than the cylindrical projection 22a. The inner face 36a of the filler collar 22b is flat but bears a plurality of radially-extending ribs 36b (Fig. 21) which extend inwardly and engage the transverse wall 36. These ribs 36b have passages 41b therebetween so as to provide fluid communication from the dispenser outlets 41 of the valve member 22 through the passages 41b and the opening 41a into the socket 42. The filler collar 22b is optional and can be omitted if desired; however, the projection 22a is essential to proper operation of the connection member 70b as described below.

The spout clamp 100 is mounted upon the spout 21 by orienting the mounting member so that the open faces of the flange 110 and the channel section 112 are facing the cylindrical surface of the spout and the spout clamp 100 is then forced radially onto the spout i.e. the mounting member is first placed in the attitude shown in Fig. 18 and is then pushed downwardly in that figure onto the spout 21. As best seen in Figs. 19 and 20, the channel section 112 fits snugly between the flanges 25 and 26 as the spout clamp 100 is pushed onto the spout. The spout-engaging interior surface of the channel section 112 has the form of part of a cylinder, the interior surface of the channel section 112 comprising slightly more than a hemi-cylinder but less than a full cylinder and having a radius substantially equal to that of the cylindrical outer surface of the spout. As shown in Fig. 14, since the interior surface of the channel section 112 comprises slightly more than a hemi-cylinder, the lower ends of the channel section form a pair of locking extremities 115 which project toward each other and are spaced apart by a distance slightly less than the diameter of the spout body 20 (Fig. 2) so that as the mounting member is pushed onto the spout, the locking extremities 115 are forced away from each other and thus snap over the spout body 20 and lock the spout clamp 100 thereon until an operator pulls the spout clamp 100 off the spout 21. As shown in Figs. 19 and 20, the flanges 25 and 26 coact with the ends of the channel section 112 so that the channel section cannot move inwardly or outwardly relative to the spout 21. Thus, the engagement between the spout clamp 112, the flanges 25 and 26 and the cylindrical surface of the spout body 20 lying between the flanges 25 and 26 positively retains the spout clamp 100 on the spout 21, permitting the spout clamp 100 to rotate relative to the spout but not to move inwardly, outwardly or radially outwardly from the spout. Naturally, the spout 21 and/or the locking extremities 115 on the spout clamp 100 must be made sufficiently flexible to allow the locking extremities 115 to slide over the spout body 20 without the application of excessive force.

Also shown in Figs. 18, 19 and 20, when the spout clamp 100 is mounted on the spout 21 the flange 111 will lie adjacent the wall of the box W within which the bag B is held; the inner flange 25 of the spout is accommodated within the recess 113 (Fig. 14) in the flange 111. The radius of the interior, part-cylindrical surface at the upper end (in Figs. 14 and 18) of the recess 113 is made substantially equal to the radius of the flange 25, so that the part-cylindrical surface of the recess 113 frictionally engages part of the cylindrical outer wall of the flange 25, as shown in Figs. 19 and 20. Similarly, the underside, (in Figs. 14 and 18) of the flange 110 provides a part-cylindrical (actually substantially hemi-cylindrical) surface of the same radius as the outer flange 26 on the spout 21 so that this part-cylindrical surface of the flange 110 frictionally engages part of the cylindrical outer surface of the flange 26.

As shown in Fig. 19, before mounting the spout clamp 100 on the spout 21, the connector member 70b is withdrawn to its extreme outward position relative to the spout clamp 100 and the guide assembly so that the outward end of the plug 90 abuts the plate 105 and the tip 73 of the connector member 70b is withdrawn behind the flange 102. The connector valve 84 is of course in its closed position. To prevent accidental inward movement of the connector member 70b as the spout clamp 100 is being mounted on the spout 21, small shoulders 115 (Fig. 18) are provided on the strips 104 to retain the outer pair of lugs 93 on the connector member 70b in their outermost position. To effect dispensing of liquid from the bag B, the connector member 70b is slid inwardly relative to the guide assembly and spout clamp by applying inward finger pressure on the socket fittings 81; the guide strips 104 are sufficiently flexible to deform so as to allow the outer pair of lugs 93 to slip past the shoulders 115 when finger pressure is applied to the fittings 81. The connector member 70b slides inwardly into the socket of the valve member 22 until the tip 73 of the connector member 70b contacts the outward face of the filler collar 22b. By comparing Figs. 19 and 20, it will be seen that, just before the tip 73 contacts the outward face of the filler collar 22b, the outer end of the projection 22a abuts the end wall 84a of the connector valve member 84, thus forcing the connector valve member 84 outwardly along the valve stem 86 against the bias of the spring 87 to its open position and establishing fluid communication between the dispensing outlets 41 and the conduit 72 via the passages 41b and the central opening 41a. However, although the connector valve member 84 is now in its open position, for the reasons explained above with reference to Fig. 10 the valve member 22 has not yet begun to move axially relative to the spout 21, and thus the valve member 22 is still in its closed position and no dispensing of liquid from the bag B is effected.

To effect dispensing from the bag B, the connector member 70b is moved further inwardly to the position shown in Fig. 20, thereby moving the valve member 22 inward to its open position and establishing fluid communication from the interior of the bag B to the socket fittings 81 via the dispenser outlets 41, the passages 41b the central opening 41a in the filler collar 22b, the aperture 83 and the conduit 72. As the valve member 22 is forced inwardly relative to the spout 21, the gripper lugs 45 on the valve member are forced inwardly by the cam surface 30 (see Fig. 5) into the groove 77a, in the same manner as described above with reference to Figs. 11 and 11A.

Once the dispensing has been completed, the connector member 70b is moved outwardly by means of finger pressure on the socket fittings 81 to the position shown in Fig. 19. Such outward movement of the connector member 70b automatically restores the valve member 22 to the closed position shown in Fig. 19, for the reasons described above with reference to Figs. 10 and 11. Also, of course, the outward movement of the connector member 70b moves the end wall 84a of the connector valve member 84 away from the projection 22a on the valve member 22, and thus permits the connector valve member 84 to resume its closed position so that the aperture 83 (Fig. 17) is closed. If desired, the connector member, spout clamp 100 and guide assembly can now be removed as a unit from the spout 22 by pulling the spout clamp upwardly from the spout 21. Since the tip 73 of the connector member 70b completely fills the socket defined by the valve member 22 and the filler collar 22b, no liquid residue remains within the socket to become contaminated after the tip 73 is withdrawn from the socket.

In certain coupling and valve assemblies of the invention, a very small amount of liquid may remain within the spout 21 when the connector member is withdrawn, and it may be desirable to prevent this small amount of liquid running from the spout; for example, if the liquid within the bag B is a sticky, viscous beverage syrup such as those used commercially in making up soft, carbonated beverages, the syrup running from the spout might produce undesirable sticky deposits on work surfaces or other places. Fig. 23 shows a modified form of spout which will retain a small amount of liquid without allowing it to run from the spout. In the modified form shown in Fig. 23, an additional flange 32a is provided on the extreme outer end of the spout, this flange 32a extending outwardly and radially-inwardly from the flared portion 27 of the spout. Obviously, when the spout shown in Fig. 23 is used in an assembly such as those shown in Figs. 10 and 11, 12 or 18—21, the spout being disposed with its axis substantially horizontal, if a small amount of liquid is left on the interior cylindrical wall 21a of the spout after the connector member has been withdrawn, this small amount of liquid will drain into the lowest part of the groove defined by the flared portion 27 and the flange 32a and will not be able to run out of the spout.

All parts of the assemblies shown in Figs. 13—23 can be made of any suitable synthetic resin such as nylon, and mass production of such parts can conveniently be effected by injection molding. The assembly shown in Figs. 13—21, comprising the connector 70b, the spout clamp 100 and the guide assembly can readily be assembled or disassembled for cleaning without special tools, since by pressing the enlarged end sections 106 of the guide strips 104 inwardly the plate 105 can be removed and then the connector body 71 can be removed and disassembled by merely unscrewing the plug 90 from the connector body 71. Naturally such ease of disassembly and reassembly is necessary in an apparatus which may often be used for dispensing beverages for human consumption, since frequent cleaning of such apparatus is necessary for hygenic reasons.

## Claims

1. A coupling, connecting and valve assembly comprising a spout (21) having open inner and outer ends, a valve member (22) having an open outer end and a closed inner end, thus providing an outwardly-opening socket (42), the valve member (22) also having a dispenser outlet (41) opening into the socket (42), and the spout (21) and the valve member (22) being so shaped that they form an outer seal between them outwardly of the dispenser outlet (41) and are capable of providing an inner seal between them inwardly of the dispenser outlet (41), whereby a one-way stop (40) prevents the dispenser outlet (41) moving outwardly beyond the outer seal when the dispenser outlet (41) is disposed between the inner and outer seals, but permits inward movement of the dispenser outlet (41) inwardly of the spout (21), thus permitting dispensing of liquid through the dispenser outlet (41) and the socket (42), the coupling, connecting and valve assembly further comprising a connector member (70; 70a; 70b), one end of which is capable of being inserted into the socket (42), whereby the connector member (70; 70a; 70b) has a conduit (72) extending therethrough, the connector member (70; 70a; 70b) being such that when one end (73) of the connector member (70; 70a; 70b) is inserted into the socket (42) the dispenser outlet (41) is not blocked and the conduit (72) is in fluid communication with the interior of the socket (42), and such that by pushing the connector member (70; 70a; 70b) into the socket (42), the valve member (22) can be moved from a closed position, wherein the outlet (41) is disposed between the inner and outer seals and is thus sealed, to an open position, wherein the dispenser outlet (41) lies inwardly relative to the inner end of the spout (21) so as to permit dispensing of liquid through the dispenser outlet (41), the socket (42) and the conduit (72),

characterized in that the outer end of the valve member (22) is provided with at least one gripper lug (45) mounted on the main part of the valve member (22) by means of a resilient finger (46);

in that the outer end of the spout (21) is provided with an inwardly-tapering cam surface (30) engageable by the gripper lug (45) as the valve member (22) is inserted inwardly into the spout;

and in that the connector member (70; 70a; 70b) is provided with a groove (77; 77a) for engagement with the at least one gripper lug (45) when the connector member (70; 70a; 70b) engages the socket (42) of the valve member (22) and pulls it inwardly to permit the dispensing of liquid, and for releasing the socket (42) after the valve member (22) has been pulled outwardly to its closed position.

2. An assembly as claimed in claim 1 characterized in that the spout (21) and the valve member (22) each comprise a hollow tubular body (20, 35), the valve member body (35) being slidable axially within the spout body (20), in that the outer seal is formed by an annular seal (44) disposed on the valve member body (35) and capable of frictionally engaging the spout body (20), and in that the one-way stop comprises an annular shoulder (38) disposed on the valve member body (35) inwardly of the annular seal (44) and a stop shoulder (29) disposed on the spout body (20) and capable of engaging the annular shoulder (38).

3. An assembly as claimed in claim 2 characterized in that the inner end of the valve member socket (42) is closed by a transverse wall (36), in that the valve member (22) is provided with a skirt (43) extending inwardly from the transverse wall (36) and having an exterior sealing surface carrying the annular shoulder (38), and in that the inward end of the spout body (20) carries the stop shoulder (29) and is provided with at least one annular sealing ring (28) disposed outwardly of the stop shoulder (29) and capable of engaging the sealing surface of the skirt (43) to form the inner seal.

4. An assembly as claimed in any one of the preceding claims characterized by a dust cap (23) having a body portion (55) capable of extending into the socket (42) of the valve member (22), a periphery flange (58) capable of covering the outer ends of the valve member (22) and the spout (21), and a second flange (60) extending inwardly from the periphery flange (58) and capable of surrounding the outer end of the spout (21).

5. An assembly as claimed in claim 4 characterized in that the dust cap (23) can frictionally engage the spout (21) in a first position when the valve member (22) is disposed in an outward position relative to the spout (21), and in that the dust cap (23) can frictionally engage the spout (21) in a different, second position when the valve member (22) is disposed in an inward position relative to the spout (21).

6. An assembly as claimed in any one of the preceding claims characterized by a mounting member (100) capable of being releasably mounted on the spout (21) and by a guide member (93, 104, 105, 106) connected to the mounting member (100) and capable of supporting the connector member (70; 70a; 70b) while permitting the connector member (70; 70a; 70b) to move inwardly and outwardly relative to the spout.

7. An assembly as claimed in claim 6 characterized in that the spout (21) has a cylindrical outer surface, and in that the mounting member (100) is provided with a spout-engaging, part-cylindrical interior surface having a radius substantially equal to that of the cylindrical outer surface of the spout (21) and capable of engaging this outer surface, the spout-engaging, part-cylindrical interior surface comprising more than a hemi-cylinder but less than a fully cylinder.

8. An assembly as claimed in claim 7 characterized in that the spout (21) is provided with an inner flange (25) and an outer flange (26), both these flanges extending radially-outwardly from the spout (21) and having cylindrical outer surfaces, in that the mounting member (100) is provided with a first part-cylindrical interior surface capable of engaging the cylindrical outer surface of the inner flange (25) and a second part-cylindrical interior surface capable of engaging the cylindrical outer surface of the outer flange (26), the spout-engaging, part-cylindrical interior surface of the mounting member (100) being disposed between, and of smaller radius than, the first and second part-cylindrical interior surfaces such that engagement of the spout-engaging, part-cylindrical interior surface of the mounting member (100) with the cylindrical outer surface of the spout (21) will permit rotation, but will prevent relative inward and outward movement, between the mounting member (100) and the spout (21).

9. An assembly as claimed in any one of the preceding claims characterized by a connector valve member (84) movable between a closed position, wherein it closes the conduit (72) though the connector member (70b) adjacent the end of the connector member (70b) insertable into the socket (42), and an open position, wherein it permits flow through the conduit (72), and by a biasing device (87) biasing the connector valve member (84) towards its closed position, and further characterized in that the valve member (22) is provided with a projection (22a) capable of engaging the connector valve member (84) and moving it from its closed to its open position when the connector member (70b) is inserted into the socket (42).

10. An assembly as claimed in claim 9 characterized in that the connector valve member (84) has the form of a tube having a closed forward end (84a) engageable by the projection (22a), the tube being slidably mounted on a stem (86) mounted on the connector member (70b), and in that the biasing device (87) has the form of a spring (87) surrounding the stem (86) and retained between shoulders (88, 89) provided on the stem (86) and tube.

**Patentansprüche**

1. Kupplungs-, Anschluß- und Ventil-Einheit mit einem Anschluß- stutzen (21) mit offenen inneren und äußeren Enden, einem Ventilkörper (22) mit einem offenen äußeren Ende und einem geschlossenen inneren Ende, dadurch mit einer nach außen offenen Dose (42) versehen, wobei der Ventilkörper (22) noch einen zur Dose (42) sich öffenden Ausgabeauslaß (41) aufweist, und der Anschlußstutzen (21) und der Ventilkörper (22) so gestaltet sind, daß sie zwischen sich eine vom Ausgabeauslaß (41) nach außen gerichtete äußere Dichtung bilden und geeignet sind, zwischen sich eine vom Ausgabeauslaß (41) nach innen gerichtete innere Dichtung vorzusehen, wobei ein Einweganschlag (40) verhindert, daß sich der Ausgabeauslaß (41) nach außen über die äußere Dichtung hinaus bewegt, wenn sich der Ausgabeauslaß (41) zwischen der inneren und der äußeren Dichtung befindet, aber eine Einwärtsbewegung des Ausgabeauslasses (41) vom Anschlußstutzen (21) nach innen zuläßt und dadurch die Ausgabe von Flüssigkeit durch den Ausgabeauslaß (41) und die Dose (42) ermöglicht, und wobei die Kupplungs- Anschluß- und Ventil-Einheit außerdem einen Anschlußteil (70, 70a, 70b) enthält, dessen eines Ende zur Einführung in die Dose (42) geeignet ist, wobei der Anschlußteil (70, 70a, 70b) einen sich durch ihn hindurch erstreckenden Kanal (72) aufweist, der Anschlußteil (70, 70a, 70b) so gestaltet ist, daß bei Einführung eines Endes (73) des Anschlußteiles (70, 70a, 70b) in die Dose (42) der Ausgabeauslaß (41) nicht versperrt ist und der Kanal (72) in Fluid-Verbindung mit dem Inneren der Dose (42) steht und daß bei Eindrücken des Anschlußteiles (70, 70a, 70b) in die Dose (42) der Ventilkörper (22) aus einer Schließstellung, in der der Auslaß (41) zwischen der inneren und der äußeren Dichtung angeordnet und daher abgedichtet ist, in eine Offenstellung verschoben werden kann, in der der Ausgabeauslaß (41) relativ zum inneren Ende des Anschlußstutzens (21) nach innen zu liegen kommt, so daß die Ausgabe von Flüssigkeit durch den Ausgabeauslaß (41), die Dose (42) und den Kanal (72) ermöglicht wird, dadurch gekennzeichnet,

daß das äußere Ende des Ventilkörpers (22) mit wenigstens einem Greiferansatz (45) versehen ist, der am Hauptteil des Ventilkörpers (22) mittels eines elastischen Fingers (46) angesetzt ist,

daß das äußere Ende des Anschlußstutzens (21) mit einer sich nach innen verjüngenden Kurvenfläche (30) versehen ist, an der der Greiferansatz (45) angreifen kann, wenn der Ventilkörper (22) nach innen in den Anschlußstutzen eingeführt wird,

und daß der Anschlußteil (70, 70a, 70b) mit einer Nut (77, 77a) für den Eingriff wenigstens des einen Greiferansatzes (45) versehen ist, wenn der Anschlußteil (70, 70a, 70b) in die Dose (42) des Ventilkörpers (22) eingreift und sie nach innen mitnimmt, um die Ausgabe von Flüssigkeit zu ermöglichen, und für die Freigabe der Dose (42) nach dem Herausziehen des Ventilkörpers nach außen in seine Schließstellung.

2. Einheit nach Anspruch 1, dadurch gekennzeichnet, daß der Anschlußstutzen (21) und der Ventilkörper (22) jeweils einen hohlen rohrförmigen Körper (20, 35) enthalten, wobei der Körper (35) des Ventilkörpers axial gleitbar im Körper (20) des Anschlußstutzens ist, daß die äußere Dichtung als ringförmige Dichtung (44) ausgebildet ist, die am Körper (35) des Ventilkörpers angeordnet und zum kraftschlüssigen Angreifen am Körper (20) des Anschlußstutzens geeignet ist, und daß der Einweg-Anschlag eine ringförmige Schulter (38) aufweist, die am Körper (35) des Ventilkörpers von der ringförmigen Dichtung (44) nach innen gerichtet angeordnet ist, und eine Anschlagschulter (29) aufweist, die am Körper (20) des Anschlußstutzens angeordnet und geeignet ist, an der ringförmigen Schulter (38) anzugreifen.

3. Einheit nach Anspruch 2, dadurch gekennzeichnet, daß das innere Ende der Ventilkörperdose (42) durch eine Querwand (36) abgeschlossen ist, daß der Ventilkörper (22) mit einem Hemd (43) versehen ist, das dich von der Querwand (36) nach innen erstreckt und eine äußere Dichtfläche aufweist, die die ringförmige Schulter (38) trägt, und daß das nach innen gerichtete Ende des Körpers (20) des Anschlußstutzens die Anschlagschulter (29) trägt und mit wenigstens einem ringförmigen Dichtring (28) versehen ist, der von der Anschlagschulter (29) nach außen gerichtet angeordnet und geeignet ist, an der Dichtfläche des Hemdes (43) zur Ausbildung einer inneren Dichtung anzugreifen.

4. Einheit nach einem der vorhergehenden Ansprüche, gekennzeichnet durch eine Staubkappe (23) mit einem Hauptteil (55), der geeignet ist, sich in die Dose (42) des Ventilkörpers (22) zu erstrecken, mit einem peripheren Flansch (58), der geeignet ist, die äußeren Enden des Ventilkörpers (22) und des Anschlußstutzens (21) zu überdecken, und einem zweiten Flansch (60), der sich vom peripheren Flansch (58) nach innen erstreckt und geeignet ist, das äußere Ende des Anschlußstutzens (21) umschließen.

5. Einheit nach Anspruch 4, dadurch gekennzeichnet, daß die Staubkappe (23) kraftschlüssig am Anschlußstutzen (21) in einer ersten Stellung angreifen kann, wenn der Ventilkörper (22) in einer relativ zum Anschlußstutzen (21) nach außen gerichteten Stellung angeordnet ist, und daß die Staubkappe (23) kraftschlüssig am Anschlußstutzen (21) in einer anderen, zweiten Stellung angreifen kann, wenn der Ventilkörper (22) in einer relativ zum Anschlußstutzen (21) nach innen gerichteten Stellung angeordnet ist.

6. Einheit nach einem der vorhergehenden Ansprüche gekennzeichnet durch einen Befestigungsteil (100), der geeignet ist, abnehmbar am Anschlußstutzen (21) befestigt zu werden, und durch einen Führungsteil (93, 104, 105, 106), der mit dem Befestigungsteil (100) verbunden und geeignet ist, den Anschlußteil (70, 70a, 70b) zu tragen, während sich der Anschlußteil (70, 70a, 70b) relativ zum Anschlußstutzen nach innen und nach außen verschieben kann.

7. Einheit nach Anspruch 6, dadurch gekennzeichnet, daß der Anschlußstutzen (21) eine zylindrische Außenfläche besitzt und daß der Befestigungsteil (100) mit einer am Anschlußstutzen angreifenden teilzylindrischen Innenfläche versehen ist, welche einen Radius aufweist, der im wesentlichen gleich demjenigen der zylindrischen Außenfläche des Anschlußstutzens (21) ist, und welche geeignet ist, an dieser äußeren Fläche anzugreifen, wobei die am Anschlußstutzen angreifende teilzylindrische Innenfläche mehr als einen Halbzylinder, aber weniger als einen ganzen Zylinder umfaßt.

8. Einheit nach Anspruch 7, dadurch gekennzeichnet, daß der Anschlußstutzen (21) mit einem inneren Flansch (25) und einem äußeren Flansch (26) versehen ist, wobei sich diese Flansche beide vom Anschlußstutzen (21) radial nach außen erstrecken und zylindrische Außenflächen aufweisen, und daß der Befestigungsteil (100) mit einer ersten teilzylindrischen inneren Fläche versehen ist, die geeignet ist, an der zylindrischen äußeren Fläche des inneren Flansches (25) anzugreifen, und mit einer zweiten teilzylindrischen inneren Fläche versehen ist, die geeignet ist, an der zylindrischen äußeren Fläche des äußeren Flansches (26) anzugreifen, wobei die am Anschlußstutzen angreifende teilzylindrische Innenfläche des Befestigungsteiles (100) mit ihrem kleineren Radius zwischen der ersten und zweiten teilzylindrischen inneren Fläche so angeordnet ist, daß das Ineinandergreifen der am Anschlußstutzen angreifenden teilzylindrischen Innenfläche des Befestigungsteiles (100) mit der zylindrischen Außenfläche des Anschlußstutzens (21) eine Verdrehung zuläßt, aber Relativbewegungen zwischen dem Befestigungsteil (100) und dem Anschlußstutzen (21) nach innen und nach außen verhindert.

9. Einheit nach einem der vorhergehenden Ansprüche, gekennzeichnet durch einen Anschlußventilkörper (84), der verschiebbar ist zwischen einer Schließstellung, in welcher er den Kanal (72) durch den Anschlußteil (70b) nahe dem Ende des in die Dose (42) einführbaren Anschlußteiles (70b) schließt, und einer Offenstellung, in welcher er den Durchfluß durch den Kanal (72) zuläßt, und durch eine Vorspanneinrichtung (87), die den Anschlußventilkörper (84) in seine Schließstellung drückt, und außerdem dadurch gekennzeichnet ist, daß der Ventilkörper (22) mit einem Ansatz (22a) versehen ist, der geeignet ist, am Anschlußventilkörper (84) anzugreifen und ihn aus seiner Schließstellung in seine Offenstellung zu verschieben, wenn der Anschlußteil (70b) in die Dose (42) eingeführt wird.

10. Einheit nach Anspruch 9, dadurch gekennzeichnet, daß der Anschlußventilkörper (84) die Form eines Rohres mit einem geschlossenen vorderen, vom Ansatz (22a) erfaßbaren Ende (84a) aufweist, wobei das Torh gleitbar auf einem Schaft (86) angebracht ist, der am Anschlußteil (70b) befestigt ist, und daß die Vorspanneinrichtung (87) die Form einer Feder (87) aufweist, die den Schaft (86) umschließt und zwischen Schultern (88, 89) gehalten wird, die am Schaft (86) und dem Rohr vorgesehen sind.

**Revendications**

1. Assemblage de couplage et de soupape comprenant un bec (21) présentant des extrémités interne et externe ouvertes, un organe de soupape (22) présentant une extrémité externe ouverte et une extrémité interne fermée, fournissant ainsi une douille (42) s'ouvrant vers l'extérieur, l'organe de soupape (22) présentant aussi une sortie de distributeur (41) s'ouvrant dans la douille (42), et le bec (21) et l'organe de soupape (22) étant façonnés de sorte qu'ils forment un joint externe entre eux extérieurement à la sortie du distributeur (41) et sont capables de fournir un joint interne entre eux intérieurement à la sortie du distributeur (41), une butée à une voie (40) empêchant la sortie du distributeur (41) de se déplacer vers l'extérieur au-delà du joint externe quand la sortie du distributeur (41) est disposée entre les joints interne et externe, mais permettant un déplacement intérieur de la sortie du distributeur (41) intérieurement au bec (21), en permettant ainsi la distribution de liquide à travers la sortie du distributeur (41) et la douille (42), l'assemblage de couplage et de soupape comprenant de plus un organe de connexion (70; 70a; 70b), une extrémité de celui-ci étant capable d'être insérée dans la douille (42), l'organe de connexion (70; 70a; 70b) présentant un conduit (72) s'étendant à travers celui-ci, l'organe de connexion (70; 70a; 70b) étant tel que, quand une extrémité (73) de l'organe de connexion (70; 70a; 70b) est insérée dans la douille (42), la sortie du distributeur (41) n'est pas bloquée et le conduit (72) est en communication fluidique avec l'intérieur de la douille (42), et tel que, en poussant l'organe de connexion (70; 70a; 70b) dans la douille (42), l'organe de soupape (22) peut être déplacé à partir d'une position fermée, dans laquelle la sortie (41) est disposée entre les joints interne et externe et est ainsi obturée avec étanchéité, à une position ouverte, dans laquelle la sortie du distributeur (41) se trouve intérieurement par rapport à l'extrémité interne du bec (21) de façon à permettre la distribution du liquide à travers la sortie du distributeur (41), la douille (42) et le conduit (72), caractérisé:

—en ce que l'extrémité externe de l'organe de soupape (22) est munie d'au moins une patte de fixation (45) montée sur la partie principale de l'organe de soupape (22) au moyen d'un doigt élastique (46);

—en ce que l'extrémité externe du bec (21) est munie d'une surface de came conique intérieurement (30) engageable par la patte de fixation (45) quand l'organe de soupape (22) est inséré intérieurement dans le bec;

—et en ce que l'organe de connexion (70; 70a; 70b) est munie d'une rainure (77; 77a) pour s'engager avec la patte de fixation (45) quand l'organe de connexion (70; 70a; 70b) engage la douille (42) de l'organe de soupape (22) et la tire intérieurement pour permettre la distribution du liquide, et pour relâcher la douille (42) après que l'organe de soupape (22) a été tiré extérieurement vers sa position fermée.

2. Assemblage selon la revendication 1, caractérisé en ce que le bec (21) et l'organe de soupape (22) comprennent chacun un corps tubulaire creux (20, 35), le corps (35) de l'organe de soupape étant coulissant axialement à l'intérieur du corps (20) du bec, en ce que le joint externe est formé par un joint annulaire (44) disposé sur le corps (35) de l'organe de soupape et capable d'engager, par frottement, le corps (20) du bec, et en ce que la butée à une voie comprend un épaulement annulaire (38) disposé sur le corps (35) de l'organe de soupape intérieurement au joint annulaire (44) et un épaulement de butée (29) disposée sur le corps (20) du bec et capable d'engager l'épaulement annulaire (38).

3. Assemblage selon la revendication 2, caractérisé en ce que l'extrémité interne de la douille (42) de l'organe de soupape est obturée par une paroi transversale (36), en ce que l'organe de soupape (22) est muni d'une upe (43) s'étendant intérieurement à partir de la paroi transversale (36) et présentant une surface d'étanchéité extérieure portant l'épaulement annulaire (38), et en ce que l'extrémité intérieure du corps (20) du bec porte l'épaulement de butée (29) est est munie d'au moins une bague d'étanchéité annulaire (28) disposée extérieurement à l'épaulement de butée (29) et capable d'engager la surface d'étanchéité de la jupe (43) pour former le joint interne.

4. Assemblage selon l'une quelconque des revendications précédentes, caractérisé par un bouchon de protection (23) présentant une partie (55) de corps capable de s'étendre dans la douille (42) de l'organe de soupape (22), un rebord périphérique (58) capable de recouvrir les extrémités externes de l'organe de soupape (22) et du bec (21), et un second rebord (60) s'étendant intérieurement à partir du rebord périphérique (58) et capable d'entourer l'extrémité externe du bec (21).

5. Assemblage selon la revendication 4, caractérisé en ce que le bouchon de protection (23) peut engager par frottement le bec (21) dans une première position quand l'organe de soupape (22) est disposé dans une position extérieure par rapport au bec (21), et en ce que le bouchon de protection (23) peut engager par frottement le bec (21) dans une seconde position différente quand l'organe de soupape (22) est disposé dans une position intérieure par rapport au bec (21).

6. Assemblage selon l'une quelconque des revendications précédentes, caractérisé par un organe de montage (100) capable d'être monté de façon amovible sur le bec (21) et par un organe de guidage (93, 104, 105, 106) relié à l'organe de montage (100) et capable de supporter l'organe de connexion (70; 70a; 70b) tout en permettant à l'organe de connexion (70; 70a; 70b) de se séplacer intérieurement et extérieurement par rapport au bec.

7. Assemblage selon la revendication 6, caractérisé en ce que le bec (21) présente une surface externe cylindrique, et en ce que l'organe de montage (100) est muni d'une surface intérieure en partie cylindrique engageant le bec, présentant un rayon sensiblement égal à celui de la surface externe cylindrique du bec (21) et capable d'engager cette surface externe, la surface intérieure en partie cylindrique d'engagement avec le bec comprenant plus qu'un demi-cylindre mais moins qu'un cylindre entier.

8. Assemblage selon la revendication 7, caractérisé en ce que le bec (21) est muni d'un rebord interne (25) et d'un rebord externe (26), l'ensemble de ces rebords s'étendant extérieurement et radialement à partir du bec (21) et présentant des surfaces externes cylindriques, et en ce que l'organe de montage (100) est muni d'une première surface intérieure en partie cylindrique capable d'engager la surface externe cylindrique du rebord interne (25) et une seconde surface intérieure en partie cylindrique capable d'engager la surface externe cylindrique du rebord externe (26), la surface intérieure en partie cylindrique engageant le bec de l'organe de montage (100) étant disposé entre, et de plus petit rayon que, les première et seconde surfaces intérieures en partie cylindriques, de sorte que l'engagement de la surface intérieure en partie cylindrique d'engagement du bec de l'organe de montage (100) avec la surface externe cylindrique du bec (21) permettra la rotation, mais empêchera le mouvement relatif intérieur et extérieur, entre l'organe de montage (100) et le bec (21).

9. Assemblage selon l'une quelconque des revendications précédentes, caractérisé par un organe de soupape de connexion (84) déplaçable entre une position fermée, dans laquelle il obture le conduit (72) malgré l'organe de connexion (70b) adjacent à l'extrémité de l'organe de connexion (70b) insérable dans la douille (42), et une position ouverte, dans laquelle il permet l'écoulement à travers le conduit (72) et par un dispositif d'actionnement (87) sollicitant l'organe de soupape de connexion (84) vers sa position fermée, et de plus caractérié en ce que l'organe de soupape (22) est muni d'une saillie (22a) capable d'engager l'organe de soupape de connexion (84) et de le déplacer à partir de sa position fermée vers sa position ouverte quand l'élément de connexion (70b) est inséré dans la douille (42).

10. Assemblage selon la revendication 9, caractérisé en ce que l'organe de soupape de connexion (84) présente la forme d'un tube ayant une extrémité avant fermée (84a) susceptible d'être engagée par la saillie (22a) le tube étant monté de façon coulissante sur une tige (86) montée sur l'organe de connexion (70b), et en ce que le dispositif d'actionnement (87) se présente sous la forme d'un ressort (87) entourant la tige (86) et retenu entre des épaulements (88, 89) prévus sur la tige (86) et le tube.

FIG. 1

FIG. 2

FIG. 3

45

42

21

22

26

50

32

24

FIG. 4

45

45

45

46

47

46

44

22

41

35

40

38

FIG.5

FIG.5 A

FIG.6 A

FIG.6

FIG. 7

FIG. 8

FIG. 9

FIG. 10

FIG. 11

FIG. 11 A

FIG. 12

FIG. 13

FIG. 14

FIG. 15

FIG. 16

FIG.17

FIG.18

FIG. 19

FIG. 20

10

FIG. 21

FIG. 23

FIG. 22